Europäisches Patentamt

**European Patent Office**

Office européen des brevets

(11) Publication number: **0 015 774**
A1

## EUROPEAN PATENT APPLICATION

(21) Application number: 80300739.2

(22) Date of filing: 11.03.80

(51) Int. Cl.³: **B 60 B 33/02**, B 62 B 5/04

(30) Priority: 13.03.79 GB 7908895

(71) Applicant: **BRITISH CASTORS LIMITED, Britannia Works Whitehall Road, Great Bridge Tipton West Midlands (GB)**

(43) Date of publication of application: 17.09.80
**Bulletin 80/19**

(72) Inventor: **Screen, Stafford Thomas, 66 Stevens Road Wollescote, Stourbridge West Midlands (GB)**

(74) Representative: **Lewis, Samuel Hewitt et al, Forrester & Boehmert Widenmayerstrasse 5/IV, D-8000 München 22 (DE)**

(84) Designated Contracting States: **BE DE FR GB IT LU NL**

(54) **Load carrier with brake mechanism.**

㉗⑦ A wheeled pallet or other carrier having a pair of spaced wheels (12, 13) mounted on a body (10) and a respective brake element (26) for each of these wheels. A common foot pedal (28) for the brakes is connected with the brake elements by a rod (29) which extends across the body and is rotatable about its own axis. Cams formed on opposite end portions of the rod engage respective levers (33) operating plungers (30) which depress the brake elements. To enable compensation to be made for variations in the dimensions of components of the load carrier, each lever (33) is provided with an adjustable fulcrum (37).

ACTORUM AG

COMPLETE DOCUMENT

The invention relates to a load carrier of the kind comprising a body, a pair of wheels mounted on the body at respective spaced positions, respective brake elements engageable with said wheels for braking rotation thereof, an operating member mounted on the body for movement relative thereto and transmitting means for transmitting force from the operating member to the brake elements or to parts in force-transmitting relation therewith. A wheeled pallet is a common example of a load carrier of the kind referred to.

In some known load carriers of this kind, small variations in the dimensions of components result in unsatisfactory operation of the brake elements of certain samples of the load carriers.

It is an object of the invention to enable load carriers of the kind referred to having satisfactory braking means to be produced more economically.

According to the invention there is provided a load carrier comprising a body, a pair of wheels mounted on the body at respective spaced positions, respective brake elements engageable with said wheels for braking rotation thereof, an operating member mounted on the body for movement relative thereto and transmitting means for transmitting force from the operating member to the brake elements or to parts in force-transmitting relation therewith, characterised in that the transmitting means includes an adjustable lever.

In a load carrier in accordance with the invention, the lever can be adjusted to compensate for dimensional differences between load carriers which are nominally identical with each other. The load carriers can be manufactured more cheaply if the dimensional tolerances observed are fairly large.

In the accompanying drawings:-

FIGURE 1 shows a perspective view of one example of load carrier in accordance with the invention;

FIGURE 2 shows a plan view of one end portion of the carrier, a load platform being omitted; and

FIGURE 3 shows on an enlarged scale a cross-section on the line 3-3 of Figure 2.

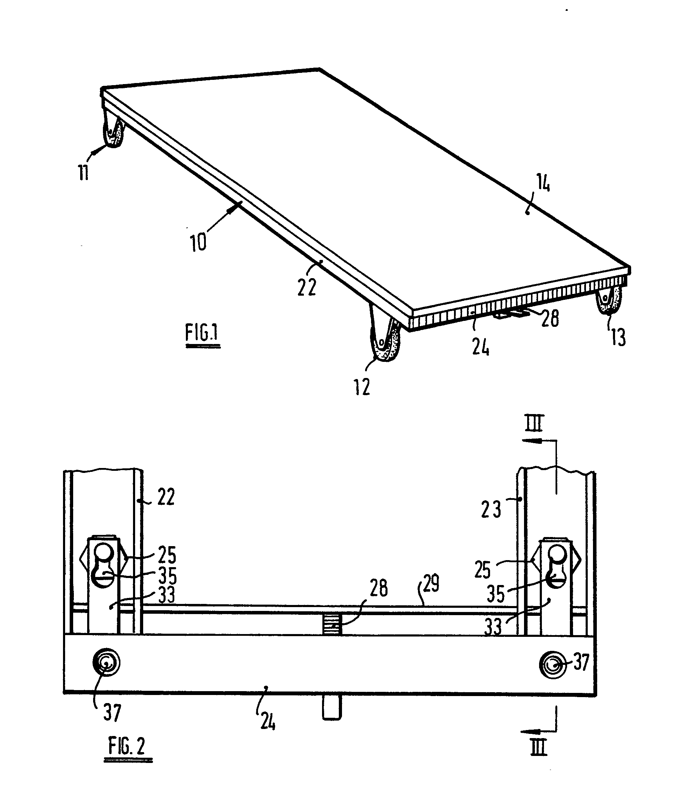

The load carrier illustrated in the accompanying drawings is a wheeled pallet having a body 10 supported on four wheels, three of which are shown at 11, 12 and 13 in Figure 1. On the body 10 there is mounted a load platform 14. The load platform and body 10 are rectangular, 'as viewed in plan and the wheels are positioned near to respective corners of the body. To enable the pallet to be steered, at least the pair of wheels 12 and 13 are incorporated in castors.

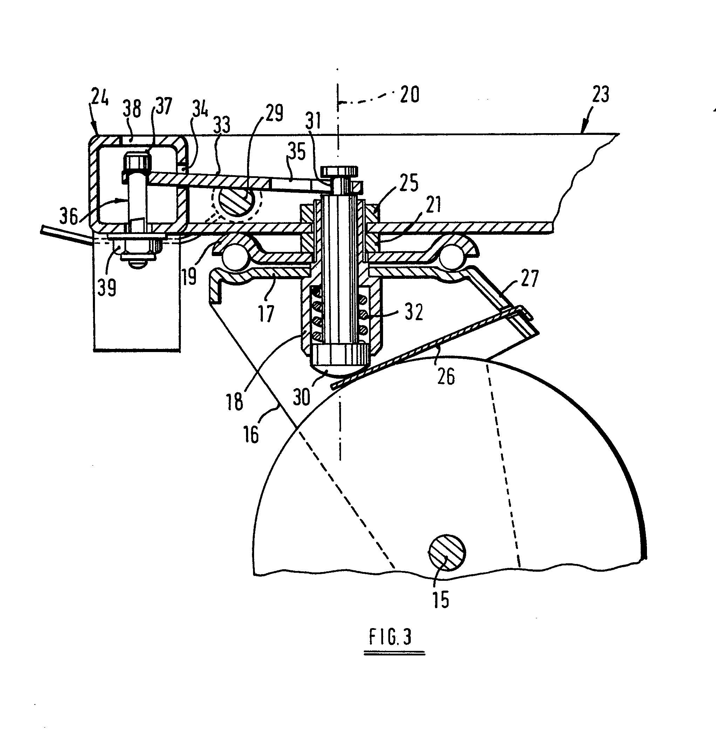

The construction of the castor incorporating the wheel 13 is illustrated in Figure 3. The wheel is rotatably mounted on an axle 15 which extends between a pair of horns, one of which is shown at 16. At their upper ends, the horns are joined together by a lower bearing plate 17 having a central aperture through which a sleeve 18 extends. Above the plate 17, there is an upper bearing plate 19 and a plurality of balls or other rolling elements are interposed between the bearing plates to facilitate relative rotation of the plates about a vertical axis 20 of the sleeve. An externally screw threaded portion of the sleeve 18 extends from the lower bearing plate 17 through a central aperture formed in the upper bearing plate and into the body 10. A nut 21 screwed onto the sleeve engages the upper surface of the plate 19 to maintain the plates and rolling elements in assembled relation. Adjacent to the lower surface of the plate 17, the sleeve is formed with an upwardly facing shoulder engaged with the bearing plate.

The body 10 includes opposite side members 22 and 23 having a channel-shaped cross section and arranged with their mouths facing upwardly. The side members are joined together by end members, one of which is shown at 24. These end members are of tubular form and have a substantially square cross section. The side members and end members are welded together to provide a frame on which the platform 14 rests. The screw threaded portion of the sleeve 18 extends through an aperture in the horizontal web of the side member 23 and is secured to the side member by an upper nut 25 screwed onto the sleeve. It will be noted that the sleeve connects the bearing plates of the castor together and also connects the bearing plates with the body 10.

Each castor incorporates a brake element 26 of elongate plate-like form. One end portion of the brake element rests on the periphery of the associated wheel. An opposite end portion of the brake element extends through a slot in an arm 27 projecting from the lower bearing plate 17. The brake element fits loosely in this slot and is retained therein in any convenient manner, for example by bending down a lug of the brake element after the lug has been passed through the aperture.

A common operating member 28 is provided to enable a user of the pallet to control braking of the wheels 12 and 13. Transmitting means is provided for transmitting force from the operating member to plungers 30 associated with the brake elements 26.

The transmitting means comprises a rectilinear rod 29, opposite end portions of which have the non-circular cross section shown in Figure 3 and thus constitute cams.

The end portions of the rod extend through aligned, circular apertures formed in the flanges of the side members 22 and 23. The side members thus support the rod 29 for rotation about its longitudinal axis, which axis is parallel to the end member 24. The operating member 28 is rigidly secured to the rod 29 and protrudes from the body 10 so as to be readily accessible to a user of the pallet.

The transmitting means further comprises plungers 30 disposed one in each of the sleeves 18 for movement along the axis of the sleeve. Each plunger is formed at its upper end with a head separated from the remainder of the plunger by a neck 31 which is narrower than the head. A lower end of the plunger bears on the brake element 26. The plunger is urged downwardly by a coiled compression spring 32 interposed between respective shoulders on the plunger and sleeve. The spring normally urges the brake element against the periphery of the wheel and establishes between the brake element and the wheel a pressure such that there is sufficient friction to restrain rotation of the wheel relative to its axle 15. The end of the plunger which is engaged with the brake element is domed to avoid restricting swivelling of the horn, lower bearing plate and brake element about the axis 20. Although there is no positive restraint on swivelling of the plunger about the axis 20, friction between the spring and the plunger and friction between the spring and the sleeve is likely to impede rotation of the plunger.

For transmitting force from the rod 29 to the plunger 30, there is provided an adjustable lever 33 which is disposed partly within the side member 23 and partly within the end member 24. The lever extends freely through an aperture 34 in a side wall of the end member. There is formed in the lever 33 near to one end thereof a keyhole-slot 35, through the wider end of which the head of the plunger 30 can pass. In the assembled pallet, the neck 31 of the plunger lies within the narrower end of the slot 35 with the head of the plunger overlying adjacent portions of the lever. There is freedom for some angular movement of the lever relative to the plunger about an axis parallel to the length of the end member 24 but relative movement of the lever and plunger along the axis 20 is almost prevented.

From the plunger 30, the lever 33 extends across the cam on the rod 29 into the end member 24 where it is engaged with a fulcrum element 36. The fulcrum element is in the form of a pin having at its upper end a head 37 and a screw thread on a lower end portion. An aperture 38 is provided in the upper wall of the end member to enable access to be gained to the head 37 of the pin. The threaded portion of the pin extends freely through a further aperture in the lower wall of the end member and is screwed into a nut 39 at the underside of the end member. A shank of the pin passes through an aperture in the lever, the lever being engaged with the underside of the head 37 so that the head restrains upward movement of an end portion of the lever and provides a fulcrum for the lever. The position of the head 37 can be adjusted upwardly and downwardly by screwing the pin through the nut 39.

During assembly of the pallet, after the castors have been secured to the body 10 and the rod 29 has been inserted into the apertures in the side members 22 and 23, each of the levers 33 is inserted through the corresponding aperture 34 and the keyhole-slot 35 is then engaged with the neck 31 of the associated plunger. When the narrow end of the keyhole-slot 35 is occupied by the neck 31, the aperture in the opposite end of the plunger is aligned with the aperture 38 in the end member so that the pin 36 can be inserted through the lever into the nut 39.

When the flat of each cam on the rod 29 is presented towards the associated lever 33, the brake element 26 is urged against the associated wheel by the spring 32 with considerable pressure and rotation of the wheel is braked. No significant force is then transmitted from the operating member 28 to the plunger 30. When the rod 29 is rotated about its longitudinal axis through an angle of approximately 90° by means of the operating member 28, there is transmitted via each cam and the associated lever to the associated plunger 30 a force which is at least equal to the force exerted on the plunger by the spring 32. The force transmitted to the plunger by the lever acts in the opposite direction to that in which the force exerted by the spring acts. The brake element 26 is thereby relieved of the pressure normally applied by the plunger and merely rests lightly on the periphery of the wheel.

Unless expensive manufacturing procedures are adopted, the relative positions and dimensions of various components of the pallet will vary from one sample to another. If the levers 33 were non-adjustable, for example if the fulcrum for each lever were provided by a preformed surface on the end member 24, such variations would be likely to result in some samples of the pallet wherein the brake could not be released properly and further samples where the brake could not be applied properly. To avoid this, the position of the head 37 of the pin 36 is adjusted upwardly or downwardly to a position such that with the brake released there is a clearance between the plunger 30 and the brake element 26 and with the brake applied travel of the plunger towards the periphery of the wheel is limited by the brake element and wheel, not by the lever.

The aperture 34 is sufficiently deep to avoid contact between upper and lower boundaries of this aperture and the lever 33 during rotation of the rod 29 in any of the intended positions of adjustment of the fulcrum.

It will be noted that when the brake is released, the levers 33 do not apply to the cams on the rod 29 any torque. Thus, the rod 29 tends to remain in a rotation position to which it has been set by a user. Whilst we have described and illustrated an example wherein the brakes are applied by springs and released by means of the operating member, it will be understood that the invention may also be applied to an arrangement wherein the brakes are released by springs and applied by means of the operating member. In such an alternative arrangement, the levers may pass beneath the cams, the adjustable fulcrum of each lever restraining downward movement of an adjacent end portion of the lever.

The brake elements 26 may be omitted, in which case the brake elements would be constituted by lower end portions of the plungers 30, such lower end portions engaging the wheels directly. It will be noted that the length of each of the levers 33 is a plurality of times less than the distance between the operating member 28 and the corresponding plunger 30. Thus, a small adjustment of the fulcrum of the lever is effective to compensate for variations within the tolerance ranges to which the pallet is manufactured. The length of the rod 29 is substantially perpendicular to the lengths of the levers 33. The cams and levers are protected by the side members 22 and 23 against damage, as the cams are disposed entirely within the side members and the levers are disposed partly within the side members and partly within the end member 24.

In place of the single operating member 28 shown in the accompanying drawing, there may be provided two operating elements which are linked with the rod 29 to provide that depression of one operating member rotates the rod in one direction and depression of the other operating member rotates the rod in the reverse direction to its initial position. Thus, application and release of the brakes would be effected by depression of the appropriate operating member.

Typically, the range of travel of the plunger 30 is 4 mm. Since the cam on the rod 29 is situated approximately half way along the lever from the plunger towards the fulcrum, the distance between the periphery of the cam and its axis of rotation varies by 2 mm. around the circumference of the cam. Typically, with a lever having a length of 70 mm., the fulcrum can be adjusted through a distance of approximately 5 mm.

In the arrangement shown in the drawings, the plunger 30 engages the brake element 26 at a distance from its fulcrum, provided by a boundary of the slot in the arm 27, which is approximately equal to the distance from the fulcrum of the element 26 to the point at which it contacts the wheel. Alternatively, the brake element may be arranged to provide a mechanical advantage. For example, a mechanical advantage of two may be provided by arranging the brake element to engage the wheel at a distance from its fulcrum which is one-half the distance from the fulcrum to the position of contact with the plunger 30.

In a case where a non-steerable wheel is required to be braked, the arrangement illustrated in the accompanying drawings may be modified by substituting for the lower and upper bearing plates 17 and 19 a single plate which is rigidly secured to the body 10 and supports the wheel for rotation about an axis which is fixed with respect to the body. A brake element, plunger and transmitting means as hereinbefore described and shown in the drawings may be provided for braking the non-steerable wheel.

CLAIMS:

1.    A load carrier comprising a body, a pair of wheels mounted on the body at respective spaced positions, respective brake elements engageable with said wheels for braking rotation thereof, an operating member mounted on the body for movement relative thereto and transmitting means for transmitting force from the operating member to the brake elements or to parts in force-transmitting relation therewith characterised in that the transmitting means includes an adjustable lever (33).

2.    A load carrier according to claim 1 further characterised in that each brake element (26) is integral with or is engaged by a respective plunger (30) which is movable towards and away from a periphery of the associated wheel (13).

3.    A load carrier according to claim 1 or claim 2 further characterised in that the lever (33) has a fulcrum which is adjustable relative to the body (10).

4.    A load carrier according to claim 2 or claim 3 further characterised in that the transmitting means comprises a pair of adjustable levers (33), one associated with each plunger (30).

5.    A load carrier according to claim 4 further characterised in that each plunger (30) is free to turn relative to the associated lever (33) about a longitudinal axis of the plunger.

6.    A load carrier according to claim 4 further characterised in that the effective length of each lever (33) is substantially less than the distance between the operating member (28) and the brake element (26) associated with that lever and in that the transmitting means comprises a further element (29) which transmits force between the operating member and the lever.

7.    A load carrier according to claim 6 further characterised in that the further element (29) is rotatable by means of the operating member (28).

8.    A load carrier according to claim 3 further characterised in that the fulcrum of the lever (33) is provided by a fulcrum element (36) having an end portion which is connected by screw thread means (39) with the body, there is engagement between the lever and the fulcrum element adjacent to the opposite end of the fulcrum element and said engagement restrains movement of the lever in a direction along the length of the lever relative to the fulcrum element.

FIG.1

FIG. 2

FIG.3

## DOCUMENTS CONSIDERED TO BE RELEVANT

| Category | Citation of document with indication, where appropriate, of relevant passages | Relevant to claim |
|---|---|---|
| X | <u>GB - A - 1 486 604</u> (HOMA)<br>* Page 2, line 104 - page 3, line 64; figures 1,3 * | 1-5 |
| A | <u>US - A - 1 604 482</u> (REID)<br>* Page 2, lines 13-49; figures 1,3 * | 1-3 |
| A | <u>US - A - 2 639 785</u> (VICKERS)<br>* Column 3, lines 21-74; figure 2 * | 1 |
| A | <u>GB - A - 24342/A.D. 1909</u> (WALKER)<br>* Page 1, lines 28-34; figures 1,2 * | 1 |
| A | <u>GB - A - 884 796</u> (AUTOSET)<br>* Page 1, lines 78-83; figure 3 * | 1 |

**CLASSIFICATION OF THE APPLICATION (Int. Cl. 3)**

B 60 B 33/02
B 62 B  5/04

**TECHNICAL FIELDS SEARCHED (Int.Cl. 3)**

B 60 B 33/00
B 62 B  5/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 20-06-1980 | AYITER |

EPO Form 1503.1  06.78